# EUROPEAN PATENT SPECIFICATION

(11) **EP 0 484 422 B1**
(45) Date of publication and mention of the grant of the patent: **11.01.1995**
(21) Application number: 90911908.3
(22) Date of filing: 27.07.1990
(51) Int. Cl.: F16L 59/10, F16L 59/14

(54) **A THERMAL AND/OR ACOUSTIC INSULATION SYSTEM**
SYSTEM ZUR WÄRME- UND/ODER SCHALLISOLIERUNG
SYSTEME D'ISOLATION THERMIQUE ET/OU ACOUTIQUE

(30) Priority: 27.07.1989 GB 8917160
(43) Date of publication of application: 13.05.1992
(73) Proprietor: RUSSELL, Ian John, Perth, PH2 7EY (GB)
(72) Inventor: RUSSELL, Ian John, Perth, PH2 7EY (GB)
(74) Representative: Szczuka, Jan Tymoteusz
(86) International application number: GB9001164
(87) International publication number: WO9102188

(56) References cited:
- CH-A- 656 935
- DE-A- 2 218 813
- DE-A- 3 110 243
- DE-A- 3 327 177
- FR-A- 1 330 293

## Description

This invention relates to an insulating system of the kind comprising conduit means, thermally and/or acoustically insulating material surround the conduit means and a protective, usually metallic, covering surrounding the insulating material and joined together along an adjacent pair of lengthwise extending edge regions in a lengthwise extending seam containing sealing material.

In the event of thermally and/or acoustically insulating material becoming wet or contaminated its very presence may prove to be counter-productive, problematic and constitute a threat to the insulated plant to which it has been applied. Therefore, without exception, when thermally and/or acoustically insulating material is installed, it is of the utmost importance that the insulating material is installed and maintained in a dry state so that it properly carries out its intended function and probably more importantly so as to ensure that its presence is not actually counter-productive or problematic.

The following four paragraphs highlight some of the hazards and detrimental effects that occur when thermally and/or acoustically insulating materials are applied in a wet state or become contaminated during service.

Unexpected dangers can arise from inter action between components of the insulation and constituents of chemical and product spillage. For example, a spillage of ethylene glycol contacting insulation containing magnesia may cause the insulation to self ignite or cause rapid flame spread in the event of a fire.

Corrosion of plant items under insulation can be a hazard if the insulation becomes contaminated with chemical or product spillage, contaminated rain water or water used via hoses for cleaning down and decontaminating the plant. This hazard is increased by the fact that resultant damage remains undetected as it is hidden by the insulation.

Many failures of austenitic steel equipment have occurred because of stress corrosion cracking caused by concentrations of chloride between the insulation and the hot facing surface of plant equipment. This is brought about by leakage from wet or moisture laden insulation material. Stress corrosion cracking of carbon steel is also known to occur when water is heavily contaminated with nitrate. In plant equipment with service temperatures of above 250 C, chloride concentrates dry out within the insultion a short distance from the inner surface and therefore stress corrosion does not occur during service. However, as damage can occur in a short period, precuations have to be taken with such plant to prevent damage occurring during plant start up. A number of serious corrosion problem attributed to defective water proofing of insulation have occurred and there are cases where very serious consequences have only been narrowly avoided but, nevertheless, have been costly to repair and rectify.

In addition to the hazard of corrosion, insulating material saturated with water of spilled products has its insulation performance and insulation value seriously impaired. Saturated insulating material is effectively transformed from an insulator to a conductor which, in the case of insulation being applied for heat conservation, increases the cost of running the plant.

In the case of insulating material being applied to prevent plant water systems from freezing or products from congealing or solidifying, it offers little or no protection and in some cases would aggravate the condition it was intended to prevent.

In view of the above considerations, it is apparent that, in order to maintain the function and performance of thermally and/or acoustically insulating material and to prevent its presence becoming a hazard or being counter productive, it is of paramount importance that insulating materials applied to plant equipment should be maintained in a dry and uncontaminated state.

Although there are many types of cladding material used to maintain insulation in a dry state, operators of large industrial plant used, for example, for producing petro-chemicals, chemicals, pharmaceuticals, gas, oil, electricity, paper, textiles, beer, spirit and food, specify metal cladding as the medium to protect and maintain their insulated sections of plant.

Current specifications applicable to the fabrication and installation of metal cladding over insulation can afford the insulation with adequate protection if the specifications of the fabrication and installation are strictly adhered to. However, even then, the integrity of the sealing of the cladding may be fragile within the environment in which it has been installed. For example it is known, in an insulating system of the kind referred to, to overlap the adjacent edge regions of the metallic covering with the sealing material sandwiched between the overlapping portions and to subsequently bolt or rivet the overlapping portions together. However in such a known insulating system the extent and quantity of the sealing material can only be verified if the length extending seam is opened up. In some instances the sealing material may be omitted altogether and in other cases a light bead of sealing material may be applied to the outside edge of the overlapping seam to fake the proper installation of a sealed joint.

Various forms of protective sleeve are known. CH-A-656935 (Eschbach) discloses a generally tubular protective sleeve covering section comprising a sheet having first and second lengthwise edge regions interengagable, in use of said section, with a sealing strip therebetween, so as to form a sealed lengthwise extending seam, the first said lengthwise edge region being provided with a lengthwise extending cavity for holding said sealing strip therein, said first and second lengthwise edge regions being formed and arranged for insertion of at least part of said second lengthwise edge region into said cavity, when installing said section, captively to interengage said first and second lengthwise edge regions.

In accordance with Eschbach, there is used an elastic sealing strip. In order for an effective seal to be achieved, each of the folded over sheet edges is provided with such an elastic strip and the edges are hooked into each other and then folded over a further time and clamped. In practice though it has been found that the more of less complex folding and clamping arrangement and the special apparatus necessary with the Eschbach system to achieve, by clamping, an effective seal, while perhaps being acceptable in a manufacturing situation, is quite unsatisfactory and inconvenient in the context of on-site installation and repair maintenance.

It is an object of the present invention to avoid or minimise one or more of the above disadvantages. In another aspect the present invention seeks to provide an insulating system incorporating an improved lengthwise extending seam.

In one aspect the present invention provides a generally tubular protective sleeve covering section comprising a sheet having first and second lengthwise edge regions interengagable, in use of said section, with a sealing strip therebetween, so as to form a sealed lengthwise extending seam, the first said lengthwise edge region being provided with a lengthwise extending cavity for holding said sealing strip therein, said first and second lengthwise edge regions being formed and arranged for insertion of at least part of said second lengthwise edge region into said cavity, when installing said section, captively to interengage said first and second lengthwise edge regions
characterised in that said sealing strip is in the form of a bead of sealant material which is sufficiently fluid, at least prior to formation of said sealed seam, to allow at least part of said second lengthwise edge region to penetrate into said sealant material bead, upon insertion of said second lengthwise edge region into the cavity, thereby to form an extended area sealing contact between said second lengthwise edge region and said bead of sealant material.

The present invention also provides an insulating system comprising inner conduit means, thermally and/or acoustically insulating material surrounding the conduit means, and a protective outer covering seamed sleeve surrounding the insulating material and joined together along adjacent first and second lengthwise extending edge regions in a lengthwise extending seam containing sealing material, the first said lengthwise edge region being provided with a lengthwise extending cavity for holding said sealing material therein, said first and second lengthwise edge regions being formed and arranged for insertion of at least part of said second lengthwise edge region into said cavity, when installing said system, captively to interengage said first and second lengthwise edge regions
characterised in that said sealing material is in the form of a bead of sealant material which is sufficiently fluid, at least prior to formation of said sealed seam, to allow at least part of said second lengthwise edge region to penetrate into said sealant material bead, upon insertion of said second lengthwise edge region into the cavity, thereby to form an extended area sealing contact between said second lengthwise edge region and said bead of sealant material.

The present invention also provides a method of acoustically and/or thermally insulating a conduit comprising the steps of:
providing thermally and/or acoustically insulating material for surrounding the conduit, and a protective outer covering sleeve section for surrounding the insulating material, which section comprises a sheet having first and second lengthwise extending edge regions in a lengthwise extending seam;
surrounding said conduit with said insulating material surrounding said insulating material with said section; and
securing said edge regions together in a lengthwise extending seam with sealing material therebetween characterised by the steps of:
providing a said sheet with said first and second edge regions formed and arranged for captive interengagement and providing said first lengthwise edge region with a lengthwise extending cavity and with a bead of sealant material in said cavity which bead of sealant material is sufficiently fluid, at least prior to formation of said sealed seam; and
inserting at least part of said second edge region into said cavity and embedding it in said bead of sealant material.

With reference to the expression "lengthwise extending" used in connection with the said edge regions, it will be appreciated that the conduit and hence the said seam and the said cavity are usually straight and the edge regions, seam and cavity will then extend longitudinally. However the term "lengthwise extending" is also intended to embrace the situation where the conduit means is curved, e.g. in an elbow or 90° turn.

Desirably the various components of the insulating system, the adjacent pairs of lengthwise extending edge regions of the sleeve covering or cladding are formed and arranged so that they will only properly interengage if the various components are correctly fitted together to form a good seal, whereby by means of visual inspection of the seam to ensure proper interengagement of the edge regions, the correct installation of the insulating material and covering or cladding can thus be easily visually verified. This removes the need closely to inspect the quality and integrity of the insulating material and covering during the progression of the installation procedure and dispenses with the need to carry out test inspections by removing random sections of installed work to verify correct installation.

Preferably one of the said edge regions has an indicator portion formed and arranged to assume an externally visible predetermined disposition relative to the other edge region in the correctly interengaged disposition of said first and second edge regions so that if the edge regions do not properly interengage, the indicator portion assumes a different relative disposition and thus provides an easily visible indication that the joint has not been correctly made. The indicator portion may be constituted by any more or less visually distinctive surface marking e.g. colouring and/or topographical discontinuity such as a ridge, groove or step.

The interengaging edge regions are conveniently shaped releasably to interlock with each other when in said captive interengagement. Preferably the parts of the edge portion defining the said cavity are designed to be opened resiliently by said second edge region as the latter is inserted into the cavity before resiliently closing during the final stages in the interengagement. The resilient nature of the channel defining the cavity resiliently holds the joint together without the need for additional fixing means, such as screw-threaded member or rivets.

Conveniently the cavity is formed integrally in said first edge region for example by folding in two opposite directions about two spaced apart parallel fold lines to define a generally channel-form cavity. Preferably the said one edge region is folded radially inwardly of the sleeve and has a generally 'Z'-shaped section.

Conveniently the leading edge of the second edge region is cranked, for example, by being bent over radially inwardly of the sleeve so as to provide an enlarged width portion which can be forcibly inserted through the mouth of the resiliently openably channel into an enlarged width portion of the channel-form cavity in which it is then captively retained. As the second edge region is inserted into the cavity it urges the sealing material towards the bottom of the cavity as the two edge regions are moved relatively into said interengagement and is embedded in sealing material.

The sealing material is preferably incorporated in the said cavity at the manufacturing stage so that the amount of sealing material introduced into the cavity can be controlled during manufacture. Desirably there is used a non-setting or delayed setting sealing material whereby a good seal can be obtained with the second edge region even when the covering section is used some time after manufacture. Preferably there is used a flexible sealing material which can accommodate a limited amount of relative movement of the edge regions in the joint. Advantageously there is used a fire resistant and/or a solvent resistant sealing material.

Various suitable sealing materials are known in the art. These are generally based on polymeric substances such as for example rubber. Particular sealing materials which can be mentioned include Fire Resistive Aluminium Metal Sealant 95-55 available from the Benjamin Foster Company of U.S.A., and oil-based mastic Joint Sealer 40.31 and butyl rubber based mastic Joint Sealer 40.34 (previously known as Elastomast 194) both available from Indenden Alumet Limited of Aldershot, England.

The outer sleeve covering is generally of sheet metal, for example, steel, including galvanised or stainless steel, or aluminium.

Preferably the protective metallic covering is formed in sections, adjacent covering sections being joined together end to end in a circumferential joint. Conveniently the opposite ends of each covering section have enlarged external diameters and the or each circumferential joint comprises a circumferential band embracing the adjacent enlarged ends of two adjacent covering sections. Preferably the or each circumferential joint includes at least one band of flexible sealing material also embraced by the circumferential band. Typically two bands of flexible sealing material are provided for each circumferential joint, a different band of flexible sealing material being intended to seal each covering section.

When insulating straight sections of conduit means, only a single straight seam is required for joining the or each section of protective metallic covering, although two or more seams could bed provided if desired. However, if the insulating system includes a curved section of conduit means, it is necessary to form the protective metallic covering of at least two segments which are joined together along at least two seams to completely surround the curved section, each seam extending lengthwise around the curved section. Preferably each covering segment consists of at least two straight sections joined, e.g. welded, together at an angle to each other with each one of said at least two seams extending around the curved section in a path consisting of at least two straight sections at an angle to each other.

Valves, flanges and junctions may also be insulated with insulating and cladding boxes each comprising insulation halves encased in a metallic casing formed of two preformed casing halves, one casing half having an edge region bent to define a cavity and the other casing half having an edge region shaped to be received in interfitting engagement with the cavity defined by the edge region of said one casing half. Preferably the sides of the casing halves are shaped to cause any liquid, e.g. rain water, contacting the box to flow away from the joint formed between the two casing halves.

The dependent claims relate to preferred embodiments of the present invention.

Embodiments of the invention will now be described, by way of example only, with reference to the accompanying drawings, in which
Figures 1A and 1B are, respectively, a sectional view through, and a side view of, an insulated conduit of a known insulating system
Figures 1C and 1D are partial sectional views illustrating two methods of sealing longitudinal seams of the known insulating system of Figures 1A and 1B,
Figures 2 and 3 are, respectively, a sectional view through, and a perspective view of part of, an insulated conduit of an insulating system according to the invention illustrating a lengthwise extending seam joining edge portions of a protective metallic covering.
Figures 4A, 4B and 4C are three partial sectional views of the insulated conduit shown in Figures 2 and 3 which illustrate how the edge portions of the metallic covering are progressively moved into interfitting engagement with each other.
Figure 5 is a side view showing two sections of protective metallic covering of an insulating system according to the invention prior to the sections being joined together by a circumferential band,
Figure 6 is a partly cut away view of a circumferential band surrounding the end of the covering sections shown in Figure 5 to form a circumferential joint of the insulating system according to the invention,
Figures 7A and 7B are a sectional view and a partial sectional view, on an enlarged scale, respectively, of the circumferential joint shown in Figure 6 prior to tightening of the circumferential band,
Figures 8A and 8B are a sectional view and a partial sectional view, on an enlarged scale, respectively, of the circumferential joint shown in Figure 6 after tightening of the circumferential joint,
Figure 9A is a side view of a partially insulated bend of a known conduit insulating system,
Figures 9B and 9C are side and sectional views, respectively, of the bend shown in Figure 9A with known protective metal coverings of the known conduit insulating system applied over the insulated bend,
Figures 10A and 10B are side and end views, respectively, of an insulated conduit bend of the insulating system according to the invention,
Figure 11 is a perspective view of a flange box of the insulating system according to the invention,
Figures 12A and 12B are a plan and end view, respectively, of a valve box of the insulating system according to the invention, and
Figure 13 is a perspective view of a conduit junction box of the insulating system according to the invention.

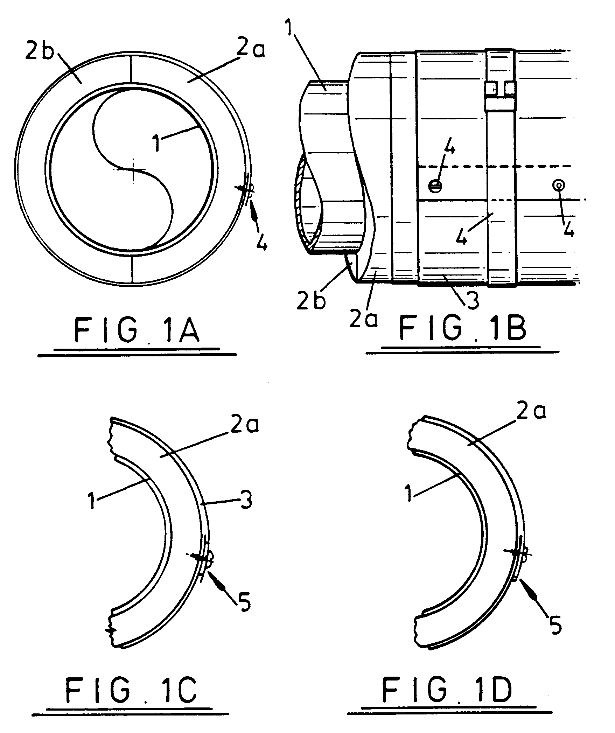

Figures 1A-D show various known conduit insulating systems. In Figures 1A, 1B and 1C there is shown an insulating system for a longitudinally extending conduit 1 having thermal and/or acoustic insulation halves 2a, 2b and a protective metallic covering 3. The metallic covering 3 has overlapping lengthwise, e.g. longitudinally, extending edge regions which are secured together in a lengthwise extending, e.g. longitudinal, seam by spaced apart securing means 4. In Figure 1A, the securing means 4 comprise self-tapping screws. In Figure 1B, three alternative securing means 4 are illustrated, namely a self-tapping screw, a pop rivet and a metal band, although in practice only one type of securing means 4 would be used in any one conduit insulating system. In order to provide an efficient seal to prevent ingress of moisture along the seam, flexible sealing material 5 is sandwiched between the overlapping longitudinal edge regions of the covering 3 as shown in Figure 1C. However the sealing material 5 has to be applied on site during installation of the insulating system and cannot be verified without separating the seam. In some instances, due to poor workmanship, the sealing material 5 may be omitted altogether or, as shown in Figure 1D, only applied in a thin layer to the outside edge of the overlapping seam to fake the proper installation of sealing material between the overlapping edge regions of the metallic covering 3.

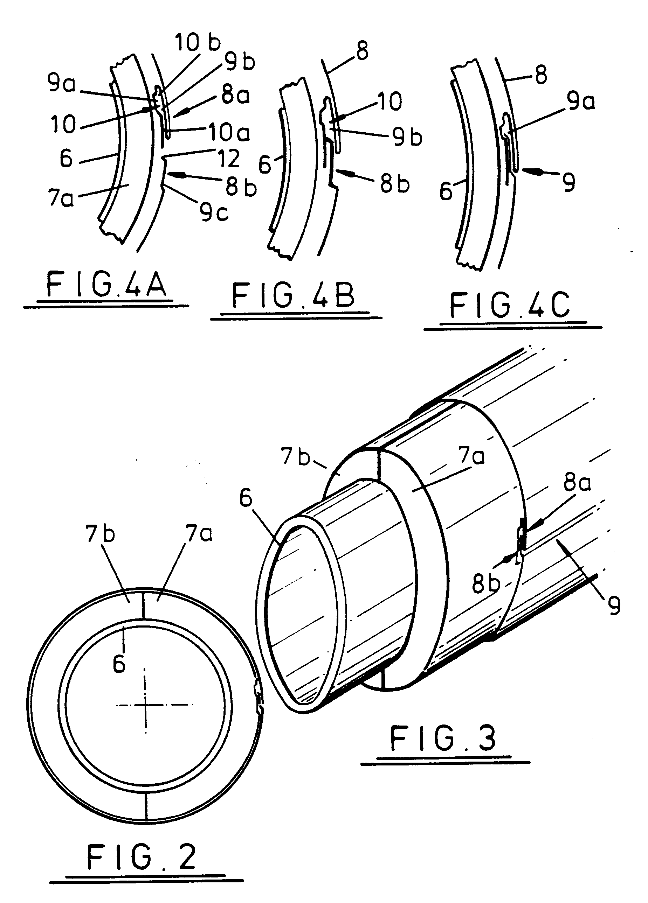

In a conduit insulating system according to the invention, longitudinal sections of conduit 6 (see Figures 2, 3 and 4A-C), having thermal and/or acoustic insulation halves 7a, 7b applied therearound, have a protective metallic covering 8 with lengthwise extending edge regions, generally designated 8a and 8b, joined together in a lengthwise extending e.g. longitudinal, seam 9. The edge region 8a is bent back and forth on itself in a generally "Z-shaped" configuration to provide a lengthwise extending cavity 10 having a narrow mouth portion 10a and an enlarged back portion 10b. The edge region 8b is inserted through the mouth portion 10a and is received in the cavity. As can be seen the two edge regions 8a and 8b are interengaged with each other along the seam 9 in interfitting engagement. The cavity 10 contains flexible non-setting, mastic-like sealing material 9a sealing the seam 9 against ingress of moisture along the length of the seam. Since the sealing material 9a is contained within the cavity 10 a bead 9b of it can be applied accurately ina controlled manner during manufacture of the covering 8 instead of subsequently on site. The covering 8 is made of resilient metal and thus the bent edge region 8a defining the cavity 10 has a resilient or springy form. The edge region 8b is bent inwardly in stepped form with the leading edge 12 bent inwardly at an angle. In order to interengage the edge regions 8a and 8b from an initial position shown in Figure 4A, the mouth portion 10a is initially sprung apart and the leading edge 12 is inserted therein as shown in Figure 4B. The leading edge 12 is moved through the mouth portion 10a, pushing or "pumping" any sealing material 9a in front of it, and into the enlarged back portion 10b of the cavity and embedding itself in the sealing material 9a whereupon the edge portion 8a springs back into its relaxed position (see Figure 4C). The resilience of the bent edge region 8a retains the edge portions 8a and 8b in interfitting engagement with the leading edge 12 located in the enlarged back portion 10b of the cavity 10 which is filled with sealing material. As can be seen in Figure 4C, the angle of the inwardly bent leading edge 12 is approximately the same as the angle of the front edge of the back portion 10b and their mating engagement also serves to retain the edge portions in the locked, interengaged condition.

The edge portions 8a and 8b will only fully interengage with each other (i.e. as shown in Figure 4C) if the insulation halves 7a and 7b are correctly fitted around the conduit 6. If the insulation halves 7a and 7b are not correctly fitted, e.g. because of an obstruction between one of the insulation halves and the conduit 6, the edge portions will not fully interengage but will, for example, adopt a position similar to that shown in Figure 4B. In this case the stepped indicator portion 8c of the edge portion 8b,. which may be distinctively coloured, is easily visible indicating that the insulation has not been correctly applied. Furthermore the joint will stay intact without separating if knocked or depressed since the edge portion 8b is supported and clamped both at the back and the front by oppositely folded portions of the edge portion 8a. This contrasts with conventional insulating systems having overlapping beams fixed with rivets, screws or locking bands in which the seam may bow open either during installation or by damage when in service to allow the ingress of moisture or foreign matter.

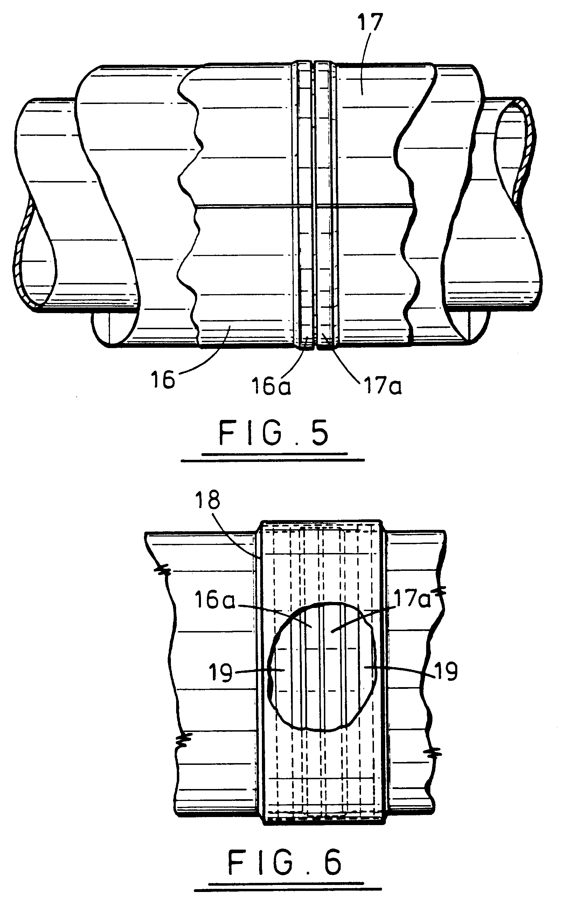

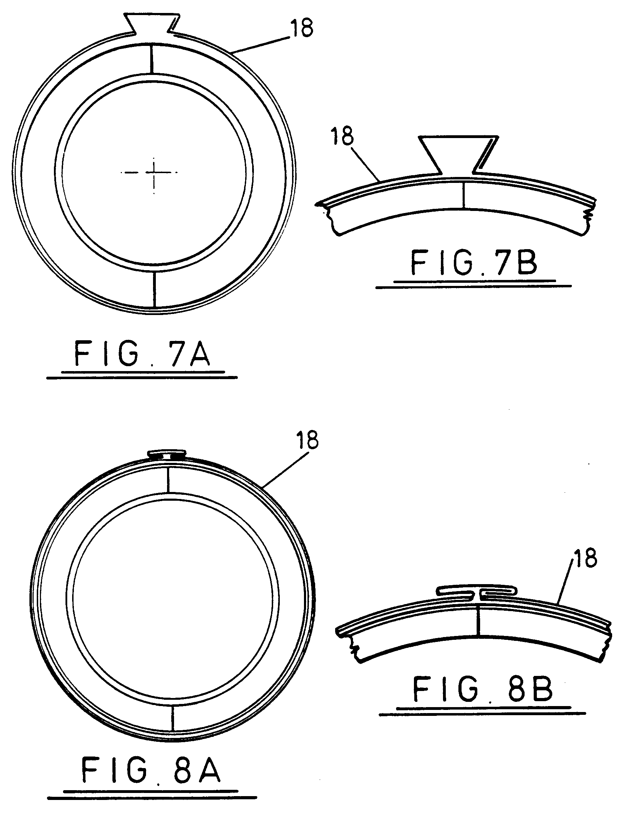

In conventional insulating systems, adjacent lengths of metallic covering are overlapped to provide a sealed, overlapped, circumferential seam or joint similar to the conventional sealed overlapping longitudinal joints. However circumferential seams if locked or stuck together can cause buckling of the cladding or alternatively the joints can ride, causing gaps in the casing thereby exposing the insulation. Again the extent and quantity of sealant between overlapping parts of the circumferential joint cannot be verified unless the metallic casing or covering is removed. In the insulating system described herein adjacent lengths 16, 17 of metallic covering are not overlapped. Instead the lengths 16, 17 have enlarged diameter end portions 16a, 17a, respectively, which are butted together (see Figure 5) and enclosed by a surrounding metallic band 18 (see Figure 6). The band 18 is initially oversized (see Figures 7A and 7B) but the joint formed by the interengaged ends of the band is compressed so that the band is tightly secured around the abutting ends of the lengths 16, 17 as shown in Figures 8A and 8B. The band 18 is factory formed with at least one, preferably two, strips 19 of flexible sealing material covered with removable peel-off paper coverings. The band 18 has circumferential inwardly extending rims which prevent the sealing material flowing outwardly from the joint when the band is compressed.

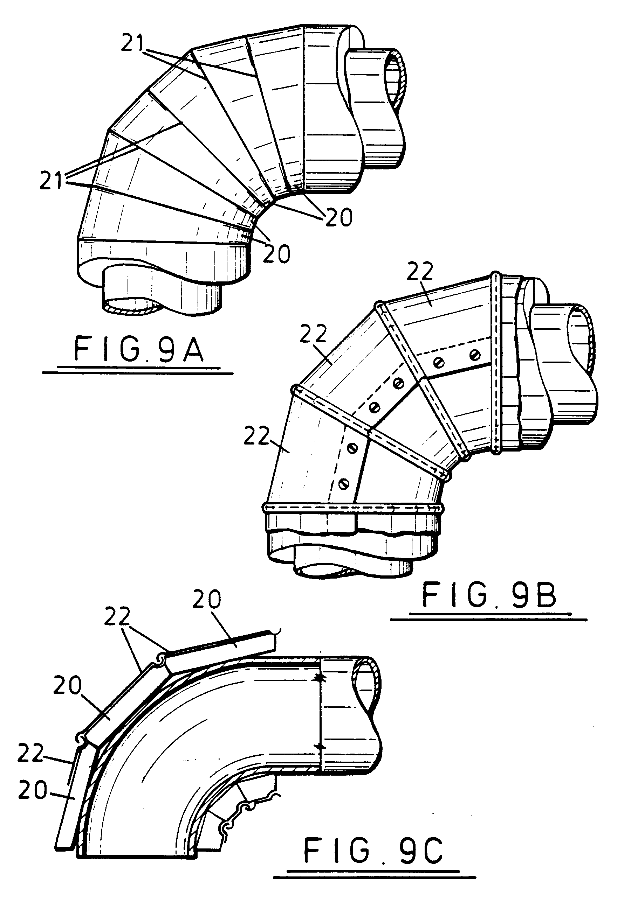

Figures 9A-C illustrate the insulation of a bend in a conventional conduit insulating system. The conventional insulating system requires the preformed conduit insulation to be cut into angular segment halves 20 to fit the radius and degree of the bend. The angular segment halves 20 are paired together and secured to the bend with tie wire 21 tensioned over the centre of the segments (see Figure 9A). The insulated bend is encased with a metal covering 22 prefabricated to the geometry of the insulated bend. The circumferential edges of each metal segment is ball swaged, one side male and the other female, thus allowing each segment of the bend to be linked together. Each segment is secured in position with self-tapping screws or pop rivets fitted to the overlapping seam (see Figures 9B and 9C).

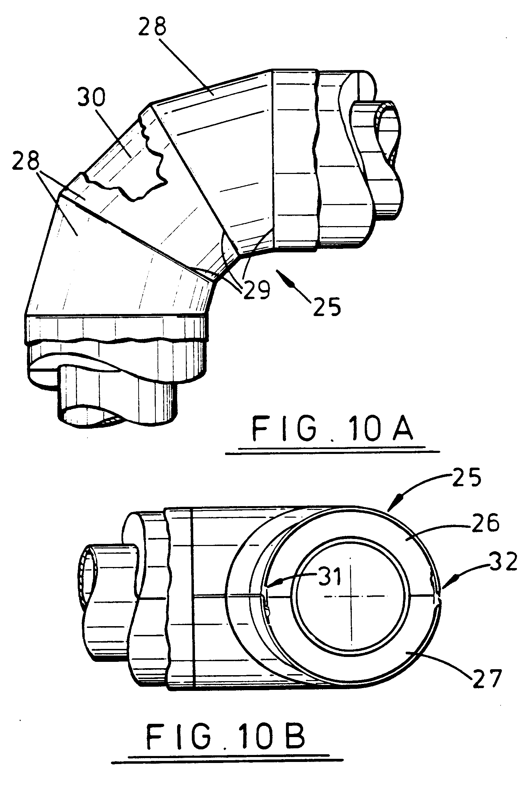

Figures 10A and 10B illustrate the insulation of a bend in the insulating system according to the invention and show a conduit bend 25 insulated with two joined together, factory fabricated insulated halves 26 and 27. Each insulated half 26, 27 comprises sections of metallic covering halves 28 welded together along semi-circular joints 29 and sections of insulation halves 30 bonded to the inside of the metallic covering halves 28.

The two insulated halves 26 and 27 are joined together along lengthwise extending seams 31 and 32 extending around the bend. Each seam 31, 32 is formed of straight sections disposed at an angle to each other and each similar to the seam 9 previously described with reference to Figures 2, 3 and 4A-C. As shown in Figure 10B, the metallic covering halves 28 forming one insulated half 26 (or 27) has one edge region formed similarly to edge region 8a and an edge region formed similarly to edge region 8b. However it is possible for the two edge regions of one insulated half to be of a similar type.

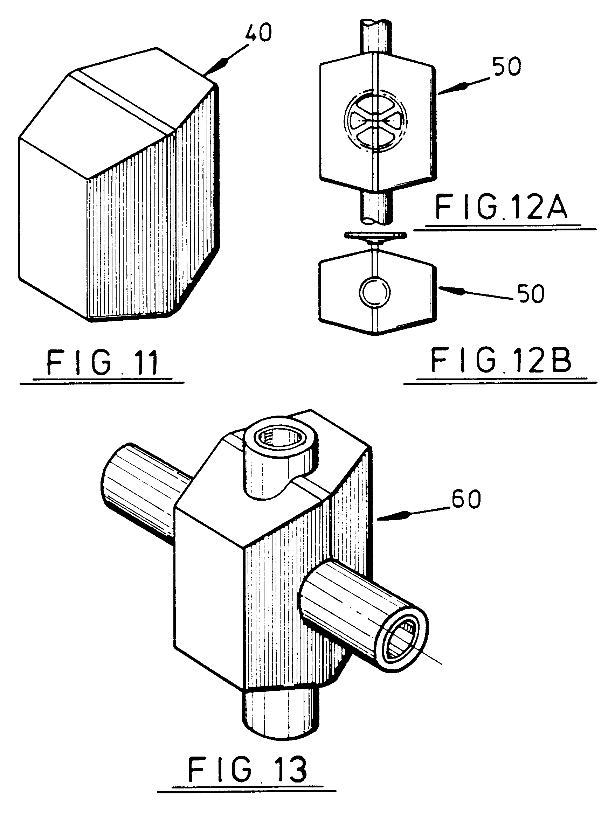

Figures 11, 12A and 12B and 13 show alternative forms of insulated parts of an insulation system according to the present invention. In each case, the insulation comprises two insulated halves joined together by interfitting joints similar to those described with reference to Figures 2, 3 and 4A-C. Figure 11 shows an insulated box 40 for insulating a flange, Figures 12A and 12B show an insulated box 50 for insulating a valve and Figure 13 shows an insulated box 60 for insulating a junction. The sides of the boxes 40, 50 and 60 are shaped, e.g. angled, to slope away from the interfitting joints so as to discourage the accumulation of liquid, e.g. rain water, in the vicinity of the joints and to positively encourage the shedding of liquid contacting the boxes.

It will be appreciated that the various components of the conduit insulating system described herein can be manufactured in a factory to the desired quality. In particular mastic-like sealing material can be applied to, and incorported in, various components for forming lengthwise extending and circumferential joints in the metallic cladding. In this way properly sealed joints can be guaranteed when the cladding is subsequently applied on site.

## Claims

1. A generally tubular protective sleeve covering section (6) comprising a sheet (8) having first and second lengthwise edge regions (8a, 8b) interengagable, in use of said section (6), with a sealing strip (9a) therebetween, so as to form a sealed lengthwise extending seam (9), the first said lengthwise edge region (8a) being provided with a lengthwise extending cavity (10) for holding said sealing strip (9a) therein, said first and second lengthwise edge regions (8a, 8b) being formed and arranged for insertion of at least part of said second lengthwise edge region (8b) into said cavity (10), when installing said section (6), captively to interengage said first and second lengthwise edge regions (8a, 8b)
characterised in that said sealing strip is in the form of a bead of sealant material (9a) which is sufficiently fluid, at least prior to formation of said sealed seam (9), to allow at least part of said second lengthwise edge region (8b) to penetrate into said sealant material bead (9b), upon insertion of said second lengthwise edge region (8b) into the cavity (10), thereby to form an extended area sealing contact between said second lengthwise edge region (8b) and said bead (9b) of sealant material (9a).

2. A section (6) according to claim 1 wherein at least one of said first and second lengthwise edge regions (8a, 8b) is formed and arranged releasably to interlock with the other of said first and second lengthwise edge regions (8a, 8b).

3. A section according to claim 2 wherein said first lengthwise edge region (8a) has at least one reverse-cranked lengthwise extending part defining a channel between it and an adjacent lengthwise extending part of said first lengthwise edge region (8a), said channel constituting said cavity (10).

4. A section according to claim 3 wherein said first lengthwise edge region (8a) is formed and arranged so that said parts thereof are resiliently displacable from a closely spaced apart captive engagement position to a more widely spaced apart insertion position, and said cavity (10) and second lengthwise edge region (8b) have respective enlarged width portions (10b, 12), whereby the enlarged width portion (12) of said second lengthwise edge region (8b) can be inserted into said enlarged width portion (10b) of said first lengthwise edge region (8a), by forcing apart said parts of the first lengthwise edge region (8a).

5. A section according to claim 3 or claim 4 wherein said first lengthwise edge region (8a) has two reverse-cranked lengthwise extending parts in a generally 'Z' - shaped configurationn defining a cavity (10) having an opening (10a) facing said second lengthwise edge region (8b).

6. A section according to claim 4 or claim 5 when dependent on claim 4 wherein said enlarged width portion (12) of said second lengthwise edge region (8b) is in the form of a transversely cranked part.

7. A section according to any one of claims 1 to 6 wherein said sealing material (9a) is of a flexible non-setting sealant material.

8. A section according to any one of claims 1 to 7 wherein one (8b) of the said edge regions (8a, 8b) has an indicator portion (8c) formed and arranged to assume an externally visible predetermined disposition relative to the other edge region (8a) in the correctly interengaged disposition of said first and second edge regions (8a, 8b) so that if the edge regions (8a, 8b) do not propertly interengage, the indicator portion (8c) assumes a different relative disposition and thus provides an easily visible indication that the joint has not been correctly made.

9. A section according to any one of claims 1 to 8 wherein said sheet (8) is of a metal selected from steel and aluminium.

10. A section according to any one of claims 1 to 9 wherein said first lengthwise edge region (8a) is integrally formed and arranged so as to define said cavity (10).

11. An insulating system comprising inner conduit means (6), thermally and/or acoustically insulating material (7a, 7b) surrounding the conduit means (6), and a protective outer covering seamed sleeve (8) surrounding the insulating material (7a, 7b) and joined together along adjacent first and second lengthwise extending edge regions (8a, 8b) in a lengthwise extending seam (9) containing sealing material (9a), the first said lengthwise edge region (8a) being provided with a lengthwise extending cavity (10) for holding said sealing material (9a) therein, said first and second lengthwise edge regions (8a, 8b) being formed and arranged for insertion of at least part of said second lengthwise edge region (8b) into said cavity (10), when installing said system, captively to interengage said first and second lengthwise edge regions (8a, 8b) characterised in that said sealing material (9a) is in the form of a bead (9b) of sealant material (9a) which is sufficiently fluid, at least prior to formation of said sealed seam (9), to allow at least part (12) of said second lengthwise edge region (8b) to penetrate into said sealant material bead (9b), upon insertion of said second lengthwise edge region (8b) into the cavity (10), thereby to form an extended area sealing contact between said second lengthwise edge region (8b) and said bead (9b) of sealant material (9a).

12. A system according to claim 11 wherein said seamed sleeve is comprised by a section (8) according to any one of claims 2 to 10.

13. A system according to claim 11 or claim 12 wherein said seamed sleeve comprises at least two sleeve sections (16, 17) with enlarged diameter free end portions (16a, 17a) joined together end to end with an annular band (18) embracing said end portions (16a, 17a) and annular bands of sealing material (19) disposed on respective sleeve sections (16, 17) at opposite sides of said end portions (16a, 17a).

14. A system according to any one of claims 11 to 13 including an elbow section, wherein said protective outer covering seamed sleeve (8) had radially inwardly and radially outwardly lengthwise extending seams (9), each said seam (9) having a said first and a said second lengthwise edge region (8a, 8b) in captive interengagement.

15. A method of acoustically and/or thermally insulating a conduit (1) comprising the steps of:
providing thermally and/or acoustically insulating material (2a, 2b) for surrounding the conduit (1), and a protective outer covering sleeve section (8) for surrounding the insulating material (2a, 2b), which section (8) comprises a sheet having first and second lengthwise extending edge regions (8a, 8b);
surrounding said conduit (1) with said insulating material (2a, 2b);
surrounding said insulating material (2a, 2b) with said section (8); and
securing said edge regions (8a, 8b) together in a lengthwise extending seam (9) with sealing material (9a) therebetween
characterised by the steps of:
providing a said sheet with said first and second edge regions (8a, 8b) formed and arranged for captive interengagement and providing said first lengthwise edge region (8a) with a lengthwise extending cavity (10) and with a bead (9b) of sealant material in said cavity (10) which bead (9b) of sealant material (9a) is sufficiently fluid, at least prior to formation of said sealed seam;
and
inserting at least part (12) of said second edge region (8b) into said cavity and embedding it in said bead (9b) of sealant material (9a).

16. A method according to claim 14 which includes the step of introducing said bead (9b) of fluid sealant material (9a) into said cavity (10) immediately before insertion of said part (12) of said second edge region (8b) thereinto.

17. A method according to claim 15 wherein is provided a said section (8) with a bead (9b) of fluid sealant material (9a) introduced thereinto the course of manufacture of said section (8).

## Patentansprüche

1. Allgemein röhrenförmiger Schutzhülsenabdeckbereich (6) mit einer Schicht (8) mit ersten und zweiten Längsrandbereichen (8a, 8b), welche bei Verwendung des Bereichs (6) mit einem Dichtungsstreifen (9a) dazwischen in Eingriff bringbar sind, um eine dichtende, sich in Längsrichtung erstreckende Naht (9) zu bilden, wobei der erste Längsrandbereich (8a) mit einem sich in Längsrichtung erstreckenden Hohlraum (10) versehen ist, um den Dichtungsstreifen (9a) darin zu halten, wobei der erste und der zweite Längsrandbereich (8a, 8b) zur Einfügung wenigstens eines Teils des zweiten Längsrandbereichs (8b) in den Hohlraum (10) bei der Installation des Bereichs (6) ausgebildet und angeordnet sind, um den ersten und den zweiten Längsrandbereich (8a, 8b) fest miteinander in Eingriff zu bringen
dadurch gekennzeichnet, daß
der Dichtungsstreifen in Form eines Wulstes aus Dichtungsmaterial (9a) vorliegt, welches ausreichend flüssig ist, wenigstens vor der Bildung der dichtenden Naht (9), damit wenigstens ein Teil des zweiten Längsrandbereichs (8b) nach Einfügen des zweiten Längsrandbereichs (8b) in den Hohlraum (10) in den Dichtungsmaterialwulst (9b) eindringen und dadurch zwischen dem zweiten Längsrandbereich (8b) und dem Wulst (9b) aus Dichtungsmaterial (9a) einen ausgedehnten Flächendichtungskontakt bilden kann.

2. Bereich (6) gemäß Anspruch 1, bei dem wenigstens einer der Randbereiche ausgewählt aus dem ersten und zweiten Längsrandbereich (8a, 8b) lösbar ausgebildet und angeordnet ist, um sich mit dem anderen Randbereich ausgewählt aus dem ersten und dem zweiten Längsrandbereich (8a, 8b) zu verriegeln.

3. Bereich gemäß Anspruch 2, bei dem der erste Längsrandbereich (8a) wenigstens einen umgekehrt gekröpften, sich in Längsrichtung erstreckenden Teil aufweist, welcher einen Kanal zwischen ihm und einem benachbarten, sich in Längsrichtung erstreckenden Teil des ersten Längsrandbereichs (8a) ausbildet, wobei der Kanal den Hohlraum (10) darstellt.

4. Bereich gemäß Anspruch 3, bei dem der erste Längsrandbereich (8a) so ausgebildet und angeordnet ist, daß dessen Teile elastisch von einer eng beabstandeten festen Eingriffsposition zu einer weiter beabstandeten Einfügeposition verschiebbar sind, und wobei der Hohlraum (10) und der zweite Längsrandbereich (8b) entsprechende erweiterte Breitenbereiche (10b, 12) aufweisen, wodurch der erweiterte Breitenbereich (12) des zweiten Längsrandbereichs (8b) in den erweiterten Breitenbereich (10b) des ersten Längsrandbereichs (8a) eingefügt werden kann, indem die Teile des ersten Längsrandbereichs (8a) auseinandergedrückt werden.

5. Bereich gemäß Anspruch 3 oder Anspruch 4, bei dem der erste Längsrandbereich (8a) zwei umgekehrt gekröpfte, sich in Längsrichtung erstreckende Teile in einer im allgemeinen "Z"-förmigen Konfiguration aufweist, welche einen Hohlraum (10) mit einer Öffnung (10a) ausbilden, welche dem Längsrandbereich (8b) gegenüberliegt.

6. Bereich gemäß Anspruch 4 oder Anspruch 5 in Abhängigkeit von Anspruch 4, bei dem der erweiterte Breitenbereich (12) des zweiten Längsrandbereichs (8b) in Form eines transversal gekröpften Teils vorliegt.

7. Bereich gemäß einem der Ansprüche 1 bis 6, bei dem das Dichtungsmaterial (9a) aus einem elastischen, nicht erhärtendem Dichtungsmaterial ist.

8. Bereich gemäß einem der Ansprüche 1 bis 7, bei dem einer (8b) der Randbereiche (8a, 8b) einen Anzeigebereich (8c) aufweist, welcher so ausgebildet und angeordnet ist, daß dieser eine von außen sichtbare, vorbestimmte Disposition relativ zum anderen Randbereich (8a) in der korrekten Eingriffsdisposition des ersten und zweiten Randbereichs (8a, 8b) einnimmt, so daß der Anzeigebereich (8c), falls die Randbereiche (8a, 8b) nicht richtig miteinander in Eingriff stehen, eine andere relative Disposition einnimmt und somit eine gut sichtbare Anzeige, daß die Verbindung nicht korrekt ausgeführt worden ist, zur Verfügung stellt.

9. Bereich gemäß einem der Ansprüche 1 bis 8, bei dem die Schicht (8) aus einem Metall ausgewählt aus Stahl und Aluminium ist.

10. Bereich gemäß einem der Ansprüche 1 bis 9, bei dem der erste Längsrandbereich (8a) einstückig ausgebildet und angeordnet ist, um den Hohlraum (10) auszubilden.

11. Dämmsystem mit innerer Rohreinrichtung (6), wärme- und/oder schalldämmendem Material (7a, 7b), welches die Rohreinrichtung (6) umhüllt, und einer eine Naht aufweisenden Schutzaußenabdeckhülse (8), welche das Dämmaterial (7a, 7b) umhüllt und entlang benachbarter erster und zweiter sich in Längsrichtung erstreckender Randbereiche (8a, 8b) in einer sich in Längsrichtung erstreckenden Naht (9) zusammengefügt ist, welche Dichtungsmaterial (9a) enthält, wobei der erste sich in Längsrichtung erstreckende Randbereich (8a) mit einem sich in Längsrichtung erstreckenden Hohlraum (10) zum Halten des Dichtungsmaterials (9a) darin versehen ist, wobei der erste und der zweite sich in Längsrichtung erstreckende Randbereich (8a, 8b) zum Einfügen wenigstens eines Teils des zweiten Längsrandbereichs (8b) in den Hohlraum (10) bei der Installation des Systems ausgebildet und angeordnet sind, um den ersten und den zweiten Längsrandbereich (8a, 8b) fest miteinander in Eingriff zu bringen
dadurch gekennzeichnet, daß
das Dichtungsmaterial (9a) in Form eines Wulstes (9b) aus Dichtungsmaterial (9a) vorliegt, welches wenigstens vor der Bildung der dichtenden Naht (9) ausreichend flüssig ist, damit wenigstens ein Teil (12) des zweiten Längsrandbereichs (8b) nach Einfügen des zweiten Längsrandbereichs (8b) in den Hohlraum (10) in den Dichtungsmaterialwulst (9b) eindringen und dadurch zwischen dem zweiten Längsrandbereich (8b) und dem Wulst (9b) aus Dichtungsmaterial (9a) einen ausgedehnten Flächendichtungskontakt bilden kann.

12. System gemäß Anspruch 11, bei dem die eine Naht aufweisende Hülse einen Bereich (8) gemäß einem der Ansprüche 2 bis 10 aufweist.

13. System gemäß Anspruch 11 oder Anspruch 12, bei dem die eine Naht aufweisende Hülse wenigstens zwei Hülsenbereiche (16, 17) mit im Durchmesser erweiterten freien Endbereichen (16a, 17a) aufweist, welche Ende an Ende mit einem die Endbereiche (16a, 17a) umgebenden ringförmigen Band (18) und ringförmigen Bändern aus Dichtungsmaterial (19), welche an entsprechenden Hülsenbereichen (16, 17) auf gegenüberliegenden Seiten der Endbereiche (16a, 17a) angeordnet sind, zusammengefügt sind.

14. System gemäß einem der Ansprüche 11 bis 13 mit einem ellbogenartigen Bereich, bei dem die eine Naht aufweisende Schutzaußenabdeckhülse (8) radial nach innen und radial nach außen sich in Längsrichtung erstreckende Nähte (9) aufweist, wobei jede Naht (9) einen ersten und einen zweiten sich in Längsrichtung erstreckenden Randbereich (8a, 8b) in festem Eingriff miteinander aufweist.

15. Verfahren zur Schall- und/oder Wärmedämmung eines Rohrs (1) mit folgenden Schritten:
Bereitstellen von wärme- und/oder schalldämmendem Material (2a, 2b) zum Umhüllen des Rohrs (1) und einem Schutzaußenabdeckhülsenbereich (8) zum Umhüllen des Dämmaterials (2a, 2b), wobei der Bereich (8) eine Schicht mit einem ersten und zweiten sich in Längsrichtung erstreckenden Randbereich (8a, 8b) aufweist;
Umhüllen des Rohrs (1) mit dem Dämmaterial (2a, 2b);
Umhüllen des Dämmaterials (2a, 2b) mit dem Bereich (8);
und
Befestigen der Randbereiche (8a, 8b) aneinander in einer sich in Längsrichtung erstreckenden Naht (9) mit Dichtungsmaterial (9a) dazwischen
gekennzeichnet durch folgende Schritte:
Bereitstellen einer Schicht mit dem ersten und zweiten Randbereich (8a, 8b), welche zum festen Eingriff miteinander ausgebildet und angeordnet sind, und Versehen des ersten sich in Längsrichtung erstreckenden Randbereichs (8a) mit einem sich in Längsrichtung erstreckenden Hohlraum (10) und mit einem Wulst (9b) aus Dichtungsmaterial in dem Hohlraum (10), wobei der Wulst (9b) aus Dichtungsmaterial (9a) wenigstens vor der Bildung der dichtenden Naht ausreichend flüssig ist; und Einfügen wenigstens eines Teils (12) des zweiten Randbereichs (8b) in den Hohlraum und Einlassen des Teils in den Wulst (9b) aus Dichtungsmaterial (9a).

16. Verfahren gemäß Anspruch 14 mit dem Schritt des Einfügens des Wulstes (9b) aus flüssigem Dichtungsmaterial (9a) in den Hohlraum (10) unmittelbar vor dem Einfügen des Teils (12) des zweiten Randbereichs (8b) in den Hohlraum.

17. Verfahren gemäß Anspruch 15, bei dem ein Bereich (8) mit einem Wulst (9b) aus flüssigem Dichtungsmaterial (9a), welcher während der Herstellung des Bereichs (8) darin eingefügt werden kann, bereitgestellt wird.

## Revendications

1. Gaine de protection globalement tubulaire recouvrant une section (6), comprenant une feuille (8) ayant des première et seconde zones de bord longitudinal (8a, 8b) pouvant être mises en prise réciproquement, lors de l'utilisation de ladite section, avec une bande d'étanchéïté (9a) entre elles, de manière à former une jonction hermétique (9) se prolongeant longitudinalement, ladite première zone de bord longitudinal (8a) étant pourvue d'une cavité (10) se prolongeant longitudinalement pour maintenir à l'intérieur ladite bande d'étanchéïté (9a), lesdites première et seconde zones de bord longitudinal (8a, 8b) étant formées et agencées pour l'insertion d'au moins une partie de ladite seconde zone de bord longitudinal (8b) dans ladite cavité (10), lors de la mise en place de ladite section (6), pour mettre en prise réciproquement de façon captive lesdites première et seconde zones de bord longitudinal (8a, 8b),
caractérisée en ce que ladite bande d'étanchéïté est sous forme d'un bourrelet à base d'un matériau d'étanchéïté (9a), qui est suffisamment fluide, au moins avant la formation de ladite jonction hermétique (9), pour permettre à au moins une partie de ladite seconde zone de bord longitudinal (8b) de pénétrer dans ledit bourrelet à base d'un matériau d'étanchéïté (9b) lors de l'insertion de ladite seconde zone de bord longitudinal (8b) dans la cavité (10), pour former, par ce moyen, un contact d'étanchéïté de surface étendue entre ladite seconde zone de bord longitudinal (8b) et ledit bourrelet (9b) à base de matériau d'étanchéïté (9a).

2. Section (6) selon la revendication 1, dans laquelle au moins une desdites première et seconde zones de bord longitudinal (8a, 8b) est formée et agencée de façon libérable pour se verrouiller réciproquement avec l'autre desdites première et seconde zones de bord longitudinal (8a, 8b).

3. Section selon la revendication 2, dans laquelle ladite première zone de bord longitudinal (8a) comprend au moins une partie incurvée en retrait se prolongeant longitudinalement, définissant un canal entre elle et une partie adjacente se prolongeant longitudinalement, de ladite première zone de bord longitudinal (8a), ledit canal constituant ladite cavité (10).

4. Section selon la revendication 3, dans laquelle ladite première zone de bord longitudinal (8a) est formée et agencée de sorte que lesdites parties de celle-ci peuvent être déplacées, de façon élastique, depuis une position en prise captive étroitement espacée vers une position d'insertion plus largement espacée, et ladite cavité (10) et la seconde zone de bord longitudinale (8b) ont des parties respectives élargies (10b, 12), ce par quoi la partie élargie (12) de ladite seconde zone de bord longitudinal (8b) peut être insérée dans ladite partie élargie (10b) de ladite première zone de bord longitudinal (8a), en poussant séparément lesdites parties de la première zone de bord longitudinal (8a).

5. Section selon la revendication 3 ou la revendication 4, dans laquelle ladite première zone de bord longitudinal (8a) a deux partie, incurvée en retrait se prolongeant longitudinalement, globalement en forme de 'Z', définissant une cavité (10) ayant une ouverture (10a) faisant face à ladite seconde zone de bord longitudinal (8b).

6. Section selon la revendication 4 ou la revendication 5, lorsque tributaire de la revendication 4, dans laquelle ladite partie élargie (12) de ladite seconde zone de bord longitudinal (8b) est sous forme d'une partie incurvée transversalement.

7. Section selon l'une quelconque des revendications 1 à 6, dans laquelle ledit matériau d'étanchéïté (9a) est à base d'un matériau d'étanchéïté souple de forme non définie.

8. Section selon l'une quelconque des revendications 1 à 7, dans laquelle l'une (8b) desdites zones de bord (8a, 8b) comprend une partie indicateur (8c) formée et agencée pour prendre une position prédéterminée visible extérieurement, par rapport à l'autre zone de bord (8a) dans la position en prise réciproque de façon correcte desdites premiere et seconde zones de bord (8a, 8b) de sorte que si les zones de bord (8a, 8b) ne sont pas mises correctement en prise réciproque, la partie indicateur (8c) prend une position relative différente et fournit ainsi une indication facilement visible de ce que le joint n'a pas été réalisé correctement.

9. Section selon l'une quelconque des revendications 1 à 8, dans laquelle ladite feuille (8) est à base d'un métal choisi à partir d'acier ou d'aluminium.

10. Section selon l'une quelconque des revendications 1 à 9, dans laquelle ladite première zone de bord longitudinal (8a) est formée et agencée d'une seule pièce de manière à définir ladite cavité (10).

11. Système d'isolation comprenant un moyen conduit intérieur (6), un matériau d'isolation thermique et/ou acoustique (7a, 7b) entourant le moyen conduit (6), et une gaine assemblée de protection par recouvrement extérieur (8) entourant le matériau d'isolation (7a, 7b) et assemblée sur elle-même le long des première et seconde zones de bord longitudinal adjacentes (8a, 8b ) en une jonction (9) se prolongeant longitudinalement, contenant le matériau d'étanchéïté (9a), ladite première zone de bord longitudinal (8a) étant pourvue d'une cavité (10) se prolongeant longitudinalement pour maintenir à l'intérieur ledit matériau d'étanchéïté (9a), lesdites première et seconde zones de bord longitudinal (8a, 8b) étant formées et agencées pour l'insertion d'au moins une partie de ladite seconde zone de bord longitudinal (8b) à l'intérieur de la cavité (10), lors de l'installation dudit système, pour mettre en prise réciproquement, de façon captive, lesdites première et seconde zones de bord longitudinal (8a, 8b),
caractérisé en ce que ledit matériau d'étanchéité (9a) est sous forme d'un bourrelet (9b) à base de matériau d'étanchéïté (9a) qui est suffisamment fluide, au moins avant la formation deladite jonction hermétique (9), pour permettre à au moins une partie (12) de ladite seconde zone de bord longitudinal (8b) de pénétrer dans le bourrelet de matériau d'étanchéïté (9b) lors de l'insertion de la seconde zone de bord longitudinal (8b) dans la cavité (10), pour former, par ce moyen, un contact d'étanchéïté de surface étendue entre ladite seconde zone de bord longitudinal (8b) et ledit bourrelet (9b) à base de matériau d'étanchéïté (9a).

12. Système selon la revendication 11, dans lequel ladite gaine assemblée est constituée d'une section (8) selon l'une quelconque des revendications 2 à 10.

13. Système selon la revendication 11 ou la revendication 12, dans lequel ladite gaine assemblée est constituée d'au moins deux sections de gaine (16, 17) avec des parties d'extrémités libres, de diamètre agrandi (16a, 17a) assemblées bout-à-bout avec une bande annulaire (18) enserrant lesdites parties d'extrémité (16a, 17a) et des bandes annulaires à base de matériau d''étanchéité (19) placées sur les sections de gaine respectives (16, 17) sur les cotés opposés desdites parties d'extrémités (16a, 17a).

14. Système selon l'une quelconque des revendications 11 à 13 comprenant une section coudée dans laquelle ladite gaine assemblée de protection par recouvrement extérieur (8) comprend des jonctions (9) se prolongeant longitudinalement radialement vers l'extérieur et radialement vers l'intérieur, chacune desdites jonctions (9) comprenant une dite premiere et une dite seconde zone de bord longitudinal (8a, 8b) en prise captive réciproque.

15. Procédé d'isolation acoustique et/ou thermique d'un conduit (1) comprenant les phases de ; fourniture d'un matériau d'isolation acoustique et/ou thermique (2a, 2b) pour entourer le conduit (1), et une section gaine de protection par recouvrement exterieur (8) pour entourer le matériau d'isolation (2a, 2b), laquelle section (8) est constituée d'une feuille comprenant des première et seconde zones de bord se prolongeant longitudinalement (8a, 8b) ; entourage dudit eonduit (1) avec ledit matériau d'isolation (2a, 2b) ; entourage dudit matériau d'isolation (2a, 2b) avec ladite section (8) ; et fixation desdites zones de bord (8a, 8b) ensemble en une jonction (9) se prolongeant longitudinalement, avec entre elles le matériau d'étanchéïté,
caractérisée par les phases de;
fourniture de ladite feuille avec lesdites première et seconde zones de bord (8a, 8b) formées et agencées pour venir en prise captive réciproque, et fourniture de ladite première zone de bord longitudinal (8a) avec une cavité (10) se prolongeant longitudinalement, et avec un bourrelet (9b) à base de matériau d'étanchéïté (9a) dans ladite cavité (10), lequel bQurrelet (9b), à base de matériau d'etanchéïté (9a), est suffisamment fluide, au moins avant la formation de ladite jonction hermétique ; et insertion d'au moins une partie (12) de ladite seconde zone de bord (8b) dans ladite cavité (10) et inclusion de celle-ci dans ledit bourrelet (9b) à base de matériau d'étanchéïté (9a).

16. Procédé selon la revendication 14 qui comprend la phase d'introduction dudit bourrelet (9b) à base de matériau d'étanchéïté (9a) dans ladite cavité (10) immédiatement avant l'insertion de ladite partie (12) de ladite seconde zone de bord (8b) dans celle-ci.

17. Procédé selon la revendication 15 dans lequel est fournie une dite section (8) avec un bourrelet (9b) à base de matériau d'étanchéïté (9a) introduit à l'intérieur de celle-ci au cours de la fabrication de ladite section (8).
